# EUROPEAN PATENT APPLICATION

(11) **EP 3 845 291 A1**
(43) Date of publication of application: **07.07.2021**
(21) Application number: 20175808.3
(22) Date of filing: 20.05.2020
(51) Int. Cl.: B01D 53/26

(54) **APPARATUS FOR REMOVING MOISTURE FROM EXHAUST GAS**

(30) Priority: 31.12.2019 KR 20190179301
(71) Applicant: ALLSWELL Co., Ltd., Incheon 21990 (KR)
(72) Inventor: KANG, Youn Soo, Incheon 21967 (KR)
(74) Representative: Ter Meer Steinmeister & Partner

(57) **Abstract**

An apparatus for removing moisture from exhaust gas is disclosed. The apparatus includes an inner chamber including an inner exhaust port, configured to discharge the exhaust gas flowing along a chimney, and an outer chamber, surrounding the inner chamber and including an outer exhaust port configured to discharge the exhaust gas discharged from the inner exhaust port, wherein an exhaust path is defined between the inner chamber and the outer chamber such that the exhaust gas discharged from the inner exhaust port flows along the exhaust path and is discharged through the outer exhaust port.

## Description

### BACKGROUND OF THE INVENTION

### Field of the Invention

The present invention relates to an apparatus for removing moisture from exhaust gas.

### Description of the Related Art

Generally, exhaust gas discharged from factories, electrical power plants and the like, contains a large amount of moisture. The moisture contained in the exhaust gas may cause a white smoke phenomenon in which the moisture condenses when the exhaust gas is discharged through a chimney and meets low-temperature external air, or may be discharged to the outside in the state of containing therein harmful material, such as sulfur oxide, nitrogen oxide, sulfuric acid gas, ammonia and carbon monoxide, which are generated in processes in factories or power-generating processes in power plants.

In order to prevent these problems, technology for condensing and thus removing moisture in exhaust gas by cooling the exhaust gas through heat exchange with refrigerant or external air or the like has been proposed. However, because there is a need for an additional component for cooling the exhaust gas in order to remove the moisture from the exhaust gas in this way, there are disadvantages in that the overall apparatus is complicated and in that costs incurred to manufacture, maintain and manage the apparatus are increased.

### SUMMARY OF THE INVENTION

Therefore, the present invention has been made in view of the above problems, and it is an object of the present invention to provide an apparatus for easily removing moisture from exhaust gas at low cost.

The object is solved by the features of the independent claims. Preferred embodiments are given in the dependent claims.

In accordance with the present invention, the above and other objects can be accomplished by the provision of an apparatus for removing moisture from exhaust gas including an inner chamber including an inner exhaust port, configured to discharge the exhaust gas flowing along a chimney, and an outer chamber surrounding the inner chamber and including an outer exhaust port, configured to discharge the exhaust gas discharged from the inner exhaust port, wherein an exhaust path is defined between the inner chamber and the outer chamber such that the exhaust gas discharged from the inner exhaust port flows along the exhaust path and is discharged through the outer exhaust port.

In at least one embodiment, the inner exhaust port may be formed in a lateral face of the inner chamber, and the outer exhaust port may be formed in an upper face of the outer chamber, whereby the exhaust gas discharged from the inner exhaust port collides with the inner surface of the outer chamber while flowing along the exhaust path and being discharged from the outer exhaust port, thereby removing the moisture from the exhaust gas.

In at least one embodiment, the inner chamber may include a chamber body, which is configured to have a hollow polyhedral shape, is mounted on the upper end of the chimney, and has an inner exhaust port formed in a lateral face thereof, and a chamber cap configured to close the upper face of the chamber body.

In at least one embodiment, the chamber cap extends horizontally at the outer periphery thereof in the outward direction of the chamber body so as to guide the exhaust gas discharged from the inner exhaust port, in a horizontal direction.

In at least one embodiment, the inner chamber may be provided with a guide configured to guide the exhaust gas discharged from the inner exhaust port in a downwardly inclined direction.

In at least one embodiment, the flowing direction of the exhaust gas discharged from the inner exhaust port may be changed such that the exhaust gas collides with the inner surface of the outer chamber while flowing along the exhaust path, thereby removing moisture from the exhaust gas, and the exhaust gas may then be discharged to the outside through the outer exhaust port.

In at least one embodiment, the exhaust path may include a first exhaust path connected to the inner exhaust port in a horizontal direction, a second exhaust path connected to the first exhaust path in a vertical direction, and a third exhaust path connected to the second exhaust path in a horizontal direction and connected to the outer exhaust port in a direction perpendicular thereto, wherein the flowing direction of the exhaust gas is changed such that the exhaust gas collides with the inner surface of the outer chamber whenever the exhaust gas flows to the second exhaust path from the first exhaust path and flows to the third exhaust path from the second exhaust path, thereby removing moisture from the exhaust gas.

In at least one embodiment, the outer chamber may be provided with a barrier configured to impede the flow of the exhaust gas that flows along the third exhaust path and is discharged from the outer exhaust port.

In at least one embodiment, the outer chamber may be provided with a barrier configured to gradually reduce the cross section of the third exhaust path in the direction in which the exhaust gas flows.

In at least one embodiment, the barrier may extend into the third exhaust path from the upper surface of the outer chamber corresponding to the outer periphery of the outer exhaust port.

In at least one embodiment, the barrier may be inclined at a predetermined angle with respect to the direction in which the exhaust gas flows along the third exhaust path from the second exhaust path.

In at least one embodiment, the apparatus may further include a drain unit configured to discharge the moisture, which is removed from the exhaust gas and flows along the inner surface of the outer chamber, to an outside of the outer chamber.

In at least one embodiment, a drain unit may be provided therein with a drain path, which communicates at the upper end thereof with the lower end of the first exhaust path and along which the moisture discharged to the outside of the outer chamber flows, and a lower portion of the first exhaust path may be inclined at a predetermined angle so as to guide the moisture that flows along the inner surface of the outer chamber, to the upper end of the drain path.

In accordance with the present invention, the above and other objects can be accomplished by the provision of an apparatus for removing moisture from exhaust gas including an inner chamber, mounted on an upper end of a chimney and including an inner exhaust port, and an outer chamber, mounted on the upper end of the chimney so as to surround the inner chamber and including an outer exhaust port, wherein the exhaust gas discharged from the chimney to the space between the inner chamber and the outer chamber through the inner exhaust port, flows along the space while changing the flowing direction thereof at least once, thereby removing moisture from the exhaust gas, and is discharged to the outside through the outer exhaust port.

In at least one embodiment, the exhaust gas that flows in the chimney, may be discharged in a horizontal direction through the inner exhaust port, and the exhaust gas that flows in the outer chamber, may be discharged in a vertical direction through the outer exhaust port.

In at least one embodiment, the projection of the outer exhaust port in a vertical direction may be positioned within the upper surface of the inner chamber.

In at least one embodiment, the upper surface of the outer chamber corresponding to the outer periphery of the outer exhaust port may be provided with a barrier configured to impede the flow of the exhaust gas discharged to the outside from the outer exhaust port.

In at least one embodiment, the apparatus may further include a drain unit, configured to discharge the moisture removed from the exhaust gas flowing in the space between the inner chamber and the outer chamber to the outside.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a longitudinal sectional view of an apparatus for removing moisture from exhaust gas according to a first embodiment of the present invention;
FIGS. 2 to 4 are longitudinal sectional views illustrating simulations of exhaust gas flowing in apparatuses for removing moisture from exhaust gas according to a related art and the first embodiment of the present invention; and
FIG. 5 is a longitudinal sectional view illustrating an apparatus for removing moisture from exhaust gas according to a second embodiment of the present invention.

### DETAILED DESCRIPTION OF THE INVENTION

Hereinafter, the construction of an apparatus for removing moisture from exhaust gas according to a first embodiment of the present invention will be described in detail with reference to the accompanying drawings.

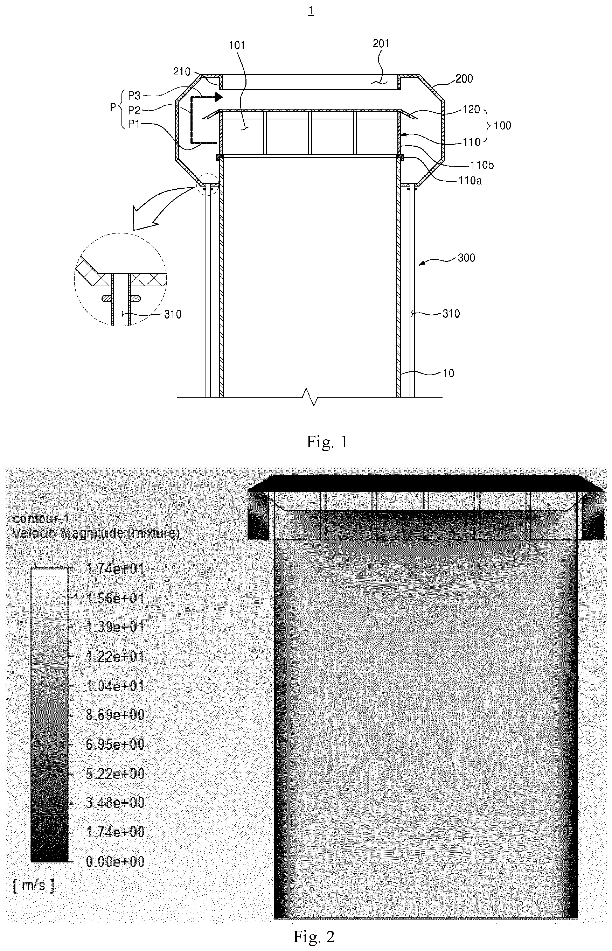

FIG. 1 is a longitudinal sectional view of the apparatus for removing moisture from exhaust gas according to the first embodiment of the present invention.

Referring to FIGS. 1 to 5, the apparatus 1 for removing moisture from exhaust gas according to the embodiment is intended to remove moisture from the exhaust gas discharged through a chimney 10, which is installed on a factory or an electrical power plant. In the embodiment, the apparatus 1 for removing moisture from exhaust gas includes an inner chamber 100 and an outer chamber 200.

The inner chamber 100 may be mounted on the upper end of the chimney 10. Preferably, the inner chamber 100 is mounted so as to cover the exhaust port at the upper end of the chimney 10, as illustrated in FIG. 1.

The inner chamber 100 is provided with an inner exhaust port 101, which is configured to discharge exhaust gas. In the embodiment, since the inner exhaust port 101 is formed in the lateral face of the inner chamber 100, rainwater cannot be introduced into the chimney 10 through the inner exhaust port 101.

In the embodiment, the inner chamber 100 includes a chamber cap 120 and a chamber body 110, configured to connect the chamber cap 120 to the chimney 10 and to support the chamber cap 120.

As illustrated in FIG. 1, the chamber body 110 includes a base 110a and a plurality of columns 110b, which are circumferentially arranged on the base 110a. The base 110a is configured to have a circular or rectangular shape and a through hole having a approximately the same size as the inside diameter of the chimney 10, and is mounted on the upper end of the chimney 10 so as to cover the chimney 10. In the embodiment, the path defined between adjacent columns 110b serves as the inner exhaust port 101. Since the chamber body 110 communicates with the chimney 10 through the through hole in the base 110a, the exhaust gas in the chimney 10 is introduced into the chamber body 110 through the through hole in the base 110a and is then discharged through the inner exhaust port 101 between the columns 110b. In another embodiment, the chamber body 110 is configured to have a hollow polyhedral shape, which is open at both the upper and lower faces of chamber body 110.

The chamber cap 120 covers and closes the upper face of the chamber body 110. In the embodiment, particularly, the outer peripheral portion of the chamber cap 120 extends horizontally beyond the outer surface of the chamber body 110. Accordingly, the exhaust gas that is discharged through the inner exhaust port 101 is guided horizontally by virtue of the outer peripheral portion of the chamber cap 120.

The outer chamber 200 is mounted on the upper end of the chimney 10 so as to surround the inner chamber 100. The outer chamber 200 includes an inner surface facing the inner exhaust port 101, and is exposed at the outer surface thereof to external cool air. Furthermore, the outer chamber 200 includes an outer exhaust port 201 configured to discharge the exhaust gas that is discharged through the inner exhaust port 101, to the outside. The term "outside" used herein refers to the outside of the outer chamber 200, that is, the atmosphere. In the embodiment, the outer exhaust port 201 is formed in the upper face of the outer chamber 200.

An exhaust path P is defined between the inner chamber 100 and the outer chamber 200. The exhaust path P is the actual path along which the exhaust gas, discharged through the inner exhaust port 101, flows to the outer exhaust port 201. In other words, the exhaust gas that flows in the chimney 10 is discharged to the exhaust path P through the inner exhaust port 101, flows along the exhaust path P, and is then discharged to the outside through the outer exhaust port 210.

As mentioned above, the inner exhaust port 101 is formed in the lateral face of the inner chamber 100, and the outer exhaust port 201 is formed in the upper face of the outer chamber 200. In the embodiment, the exhaust gas discharged through the inner exhaust port 101 flows along the exhaust path P while changing the direction of flow thereof. At this time, the exhaust gas releases moisture while colliding with the inner surface of the outer chamber 200, and is then discharged to the outside through the outer chamber 201.

The exhaust path P includes a first exhaust path P1, a second exhaust path P2 and a third exhaust path P3. The first to third exhaust paths P1, P2 and P3 are continuously disposed between the inner exhaust port 101 and the outer exhaust port 201 in the direction in which the exhaust gas flows. In other words, the first exhaust path P1 is connected to the inner exhaust port 101 in a horizontal direction, and the second exhaust path P2 is connected to the first exhaust path P1 in a vertical direction. The third exhaust path P3 is connected to the second exhaust path P2 in a horizontal direction and is connected to a path of the outer exhaust port 201 in a direction perpendicular thereto. Consequently, the exhaust gas that is discharged through the inner exhaust port 101 is changed in direction of flow thereof while flowing to the second exhaust path 2 from the first exhaust port P1 and then flowing to the third exhaust path P3 from the second exhaust path P2. During this continuous flow, moisture is removed from the exhaust gas while the exhaust gas collides with the inner surface of the outer chamber 200.

In the embodiment, the projection of the outer exhaust port 201 in a vertical direction is positioned in the outer periphery of the upper surface of the inner chamber 100. Consequently, the exhaust gas that is discharged through the inner exhaust port 101, flows through the exhaust path P, that is, the first to third exhaust paths P1, P2 and P3 in that order, and is then discharged to the outside through the outer exhaust port 201.

In the embodiment, the outer chamber 200 is provided with a barrier 210. The barrier 210 functions to impede the flow of the exhaust gas that flows along the third exhaust path P3 and is then discharged through the outer exhaust port 201. The barrier 210 extends inwards toward the third exhaust path P3 from the outer periphery of the outer exhaust port 201. The barrier 210 may extend in a direction perpendicular to the direction in which the exhaust gas flows to the third exhaust path P3 from the second exhaust path P2.

The apparatus for removing moisture from exhaust gas further includes a drain unit 300. The drain unit 300 serves to discharge the moisture that is removed from the exhaust gas flowing along the space between the inner chamber 100 and the outer chamber 200, that is, the exhaust path P, to the outside. When the exhaust gas that flows along the exhaust path P collides with the inner surface of the outer chamber 200, the moisture contained in the exhaust gas flows along the inner surface of the outer chamber 200. The drain unit 300 discharges the moisture that flows along the inner surface of the outer chamber 200, to the outside of the outer chamber 200.

To this end, a drain path 310 is defined in the drain unit 300. The moisture that is discharged to the outside of the outer chamber 200 flows along the drain path 310. The drain path 310 substantially communicates with the lower end of the first exhaust path P1. The inner surface of the outer chamber 200 is inclined at a predetermined angle in order to guide the moisture to the upper end of the rain path 310.

In the embodiment, the exhaust gas that escapes from the chimney 10 is introduced into the inner chamber 100, and is then discharged through the inner exhaust port 101. Subsequently, the exhaust gas that has been discharged through the inner exhaust port 101 flows between the inner chamber 100 and the outer chamber 200, that is, along the exhaust path P, and is then discharged to the outside of the outer chamber 200 through the outer exhaust port 201.

The direction in which the exhaust gas flows is changed while the exhaust gas flows along the exhaust path P, whereby the exhaust gas collides with the inner surface of the outer chamber 200. Consequently, moisture is removed from the exhaust gas while the exhaust gas collides with the inner surface of the outer chamber 200, and the moisture flows downwards along the inner surface of the outer chamber 200. The moisture that flows along the inner surface of the outer chamber 200 is discharged to the outside of the outer chamber 200 through the drain path 310.

Hereinafter, the operation of the apparatus for removing moisture from exhaust gas according to the first embodiment of the present invention will be described in more detail with reference to the accompanying drawings.

FIGS. 2 to 4 illustrate simulations of exhaust gas flowing in the apparatuses according to a related art and the first embodiment of the present invention.

Moisture removal efficiency was tested in a first case, in which only the inner chamber 100 is mounted on the upper end of the chimney 10 (CASE 1), a second case, in which both the inner chamber 100 and the outer chamber 200 are mounted on the upper end of the chimney 10 (CASE 2), and a third case, in which the barrier 210 is further provided in addition to both the inner chamber 100 and the outer chamber 200 (CASE 3). In the experiment, the chimney 10 had a cross section of 4200mm×3000mm and a height of 6000mm, the inner chamber 100 had a hexahedral shape of 4200mm×3000mm×2100mm, and the outer chamber 200 had a hexahedral shape of 7200mm×4800mm×4200mm. The four lateral faces of the inner chamber 100 were respectively provided with the inner exhaust ports 101, and the outer exhaust port 201 was formed in the center of the upper surface of the outer chamber 200 so as to have a rectangular shape of 4200mm×3000mm. The barrier 210 extended vertically from the outer periphery of the outer exhaust port 201 by a length of 700mm. Air containing moisture of 2.435kg/s flowed through the chimney 10 at a speed of 15m/s. The moisture removal efficiency, that is, the moisture collection efficiency, in the three cases is shown in Table 1 below.

**[Table 1]**

| | Discharge amount of moisture (kg/s) | Moisture collection efficiency (%) |
|---|---|---|
| CASE 1 | 1.7168 | 29.50 |
| CASE 2 | 0.0039 | 99.84 |
| CASE 3 | 0.0002 | 99.99 |

From Table 1, it can be seen that the moisture collection efficiency in CASE 2, in which both the inner chamber 100 and the outer chamber 200 are provided, is notably higher than in CASE 1, in which only the inner chamber 100 is provided. Furthermore, it is found that the moisture collection efficiency in CASE 3, in which the barrier 210 is further provided in addition to the inner chamber 100 and the outer chamber 200, is somewhat higher than that in CASE 2, in which only the inner chamber 100 and the outer chamber 200 are provided.

Referring to FIG. 2, in CASE 1, in which only the inner chamber 100 is provided, the exhaust gas that flows through the chimney 10 is directly discharged to the outside through the inner exhaust port 101. In this case, although some of the moisture contained in the exhaust gas is removed while the exhaust gas collides with the inner surface of the inner chamber 100, the moisture removal efficiency is very low.

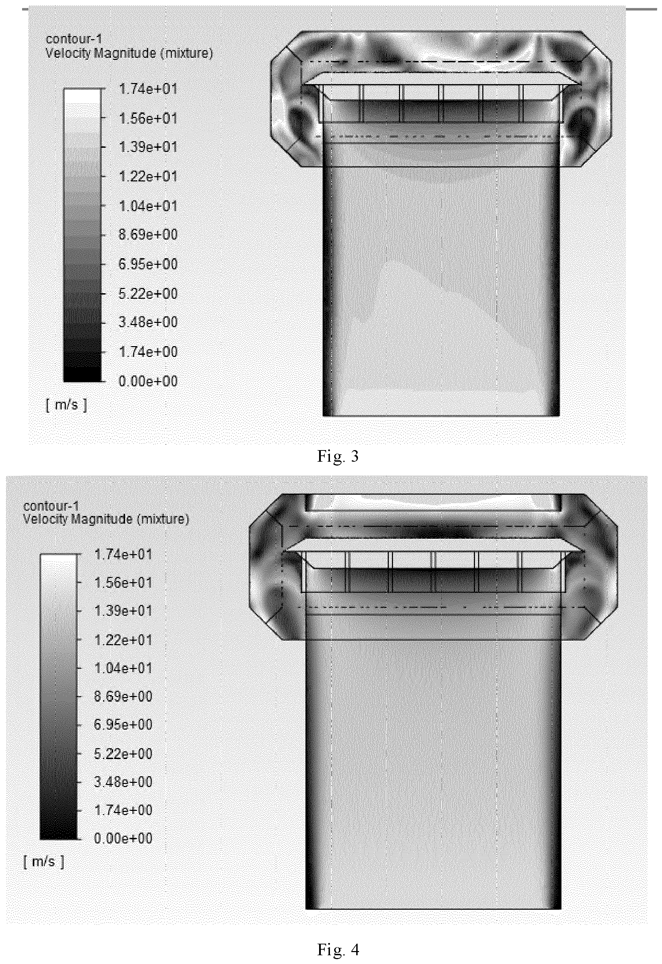

Referring to FIGS. 3 and 4, in CASE 2 and CASE 3 in which both the inner chamber 100 and the outer chamber 200 are provided, the exhaust gas that is discharged through the inner exhaust port 101 collides with the inner surface of the outer chamber 200 at high speed while flowing between the inner chamber 100 and the outer chamber 200, that is, along the exhaust path P.

By virtue of collision of the exhaust gas, it is possible to remove moisture from the exhaust gas that is discharged through the inner exhaust port 101. In the case in which the barrier 210 is further provided, it is found that the flow rate of the exhaust gas near the outer exhaust port 201 is increased due to the barrier 210, and thus the efficiency with which the moisture is removed by virtue of the collision of the exhaust gas with the inner surface of the outer chamber 200 is improved.

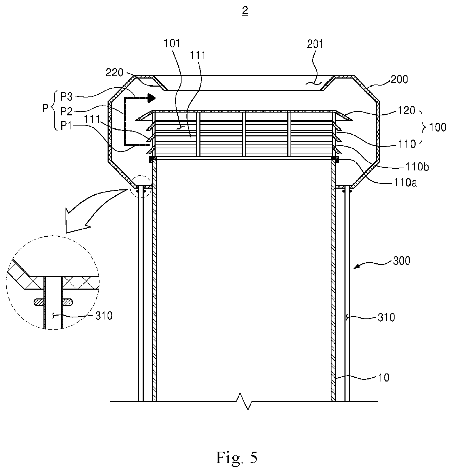

Hereinafter, an apparatus for removing moisture from exhaust gas according to a second embodiment of the present invention will be described with reference to FIG. 5.

FIG. 5 is a longitudinal sectional view illustrating the apparatus for removing moisture from exhaust gas according to the second embodiment of the present invention. When a component of the embodiment is the same as a corresponding one of the components of the first embodiment, which has been described above, the component is denoted by the reference numeral used to denote the corresponding one of the first embodiment, and a description thereof is omitted.

Referring to FIG. 5, the apparatus 2 for removing moisture from exhaust gas according to the second embodiment includes a guide 111 provided at the inner chamber 100. The guide 111 functions to guide the exhaust gas that is discharged horizontally through the inner exhaust port 101 in a downwardly inclined direction. To this end, at least one guide 111 is provided in the inner exhaust port 101 in a downwardly inclined state. In the embodiment, a barrier 220 functions to gradually reduce the cross section of the exhaust path P, particularly of the third exhaust path P3, in the direction in which the exhaust gas flows. To this end, the barrier 220 extends from the outer periphery of the outer exhaust port 201 so as to be inclined downwards at a predetermined angle with respect to the direction in which the exhaust gas flows along the exhaust path P, particularly the third exhaust path P3.

As is apparent from the above description, the present invention provides an apparatus for removing moisture from exhaust gas in which the exhaust gas discharged from a chimney collides with the inner surfaces of inner and outer chambers while flowing along the exhaust path defined between the inner chamber and the outer chamber, thereby removing moisture from the exhaust gas. Accordingly, according to the embodiments of the present invention, it is possible to easily remove moisture from exhaust gas at low cost. Particularly, in the case in which a rain hood mounted on an existing chimney serves as the inner chamber, it is possible to reduce the cost of manufacturing the apparatus.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An apparatus for removing moisture from exhaust gas comprising:
an inner chamber (100) including an inner exhaust port (101) configured to discharge exhaust gas flowing along a chimney (10); and
an outer chamber (200) surrounding the inner chamber (100) and including an outer exhaust port (210) configured to discharge the exhaust gas discharged from the inner exhaust port (101),
wherein an exhaust path (P) is defined between the inner chamber (100) and the outer chamber (200) such that the exhaust gas discharged from the inner exhaust port (101) flows along the exhaust path (P) and is discharged through the outer exhaust port (210).

2. The apparatus according to claim 1, wherein the inner exhaust port (101) is formed in a lateral face of the inner chamber (100) and the outer exhaust port (210)is formed in an upper face of the outer chamber (200).

3. The apparatus according to claim 1 or 2, wherein the exhaust gas discharged from the inner exhaust port (101) collides with an inner surface of the outer chamber (200) while flowing along the exhaust path (P) and being discharged through the outer exhaust port (210), thereby removing the moisture from the exhaust gas.

4. The apparatus according to claim 1, 2 or 3, wherein the inner chamber (100) includes a chamber cap (120), which closes an upper portion of the inner chamber (100) and extends at an outer periphery thereof beyond a lateral face of the inner chamber (100) to guide the exhaust gas discharged from the inner exhaust port (101) in a direction in which the chamber cap (120) extends.

5. The apparatus according to any one of claim 1, 2, 3 or 4, wherein the inner chamber (100) is provided with a guide (111) configured to guide the exhaust gas discharged from the inner exhaust port (101) in a downwardly inclined direction.

6. The apparatus according to any one of the preceding claims, wherein the exhaust gas discharged from the inner exhaust port (101) collides with an inner surface of the outer chamber (200) and a flowing direction thereof is changed while flowing along the exhaust path (P), thereby removing moisture from the exhaust gas, and the exhaust gas is then discharged through the outer exhaust port (210).

7. The apparatus according to any one of the preceding claims, wherein the exhaust path (P) includes at least one of:
a first exhaust path (P1) connected to the inner exhaust port (101) in a horizontal direction;
a second exhaust path (P2) connected to the first exhaust path (P1) in a vertical direction; and
a third exhaust path (P3) connected to the second exhaust path (P2) in a horizontal direction and connected to a path of the outer exhaust port (210) in a direction perpendicular thereto.

8. The apparatus according to claim 7, wherein the outer chamber (200) is provided with a barrier (210) configured to impede the flow of the exhaust gas that flows along the third exhaust path (P3) and is discharged from the outer exhaust port (210).

9. The apparatus according to claim 7 or 8, wherein the outer chamber (200) is provided with a barrier (220) configured to gradually reduce a cross section of the third exhaust path (P3) in a direction in which the exhaust gas flows.

10. The apparatus according to any one of the preceding claims, further comprising a drain unit (300) configured to discharge the moisture, which is removed from the exhaust gas and flows along an inner surface of the outer chamber (200), to an outside of the outer chamber (200).

11. The apparatus according to claim 10, wherein the drain unit (300) includes a drain path (310) communicating with an inside of the outer chamber (200).

12. The apparatus according to claim 11, wherein a portion of the inner surface of the outer chamber (200) is inclined at a predetermined angle so as to guide the moisture flowing along the inner surface of the outer chamber (200) to an upper end of the drain path (310).
